# EUROPEAN PATENT APPLICATION

(11) **EP 4 357 573 A1**
(43) Date of publication of application: **24.04.2024**
(21) Application number: 21960299.2
(22) Date of filing: 15.10.2021
(51) Int. Cl.: E05F 15/659, B60J 5/06

(54) **VEHICLE AND SLIDING DOOR CONTROL MODULE**

(71) Applicant: Zhejiang Geely Holding Group Co., Ltd., Hangzhou, Zhejiang 310051 (CN); Geely Automobile Research Institute (Ningbo) Co., Ltd, Ningbo, Zhejiang 315336 (CN)
(72) Inventor: SHI, Hongwei, Ningbo, Zhejiang 315336 (CN); ZHANG, Guangyong, Ningbo, Zhejiang 315336 (CN); LIN, Zhenliang, Ningbo, Zhejiang 315336 (CN); LU, Yun, Ningbo, Zhejiang 315336 (CN); LV, Guangwei, Ningbo, Zhejiang 315336 (CN); LI, Runguo, Ningbo, Zhejiang 315336 (CN)
(74) Representative: 2K Patentanwälte Blasberg Kewitz & Reichel
(86) International application number: PCT/CN2021/124139
(87) International publication number: WO 2023/060568

(57) **Abstract**

The invention provides a vehicle and a control module for sliding door therefor, which relates, in particular, to the field of vehicle electronic control. The vehicle includes a vehicle body, a sliding door, a switch, and a door control module. The vehicle body is provided inside with a main power supply and a vehicle body controller; the sliding door is mounted on the vehicle body; the switch is arranged at a position where the sliding door is in contact with the vehicle body, and connects a circuit on the sliding door and the vehicle body when the sliding door is closed; the door control module is arranged in the sliding door, and includes an backup power supply and a controller that are integrated, the backup power supply being electrically connected with each electrical component on the sliding door, the controller being electrically connected with each component on the sliding door that needs to be controlled, and being communicated with the vehicle body controller; and the backup power supply and the controller provide power support and control support for each component on the sliding door respectively when the sliding door is opened. The invention can enable the vehicle to maintain normal operation of the sliding door under wireless wiring connection, and has the advantages of simple structure, versatility and high integration.

## Description

### BACKGROUND OF THE INVENTION

### Field of the Invention

The invention relates to the technical field of electronic control for vehicles, in particular, to a vehicle and a control module for sliding door therefor.

### Description of the Prior Art

There are many ways to open vehicle doors. In order to meet the growing needs of customers such as larger space, larger cargo capacity, more convenient ways to get out of the vehicle and better loading and unloading space, sliding doors are used more and more frequently in vehicles. Common-used electrical systems for sliding door require continuous power supply, namely the wiring harness of sliding door, for connection to realize the electrical functions on the sliding door. However, these systems require a special wiring harness for sliding door, which cannot be used universally by all vehicle models, and also require an interior panel to shield the wiring harness for sliding door so that the structure is complex. Therefore, there is an urgent need to develop a vehicle equipped with an electronic control system for sliding door, and to configure an electronic control system for sliding door in the vehicle that is simple in structure, highly versatile and does not require complex matching structure design, so as to solve the above drawbacks in the prior art.

### SUMMARY OF THE INVENTION

In view of the above disadvantages in the prior art, an objective of the invention is to provide a vehicle and a control module for sliding door therefor. The electronic control system for sliding door mounted in the vehicle may improve the technical problems in the prior art that the electronic control system on the sliding door needs to be connected to the vehicle body through the wiring harness for sliding door, and the wiring harness for sliding door on the vehicle has a complex structure and poor versatility.

In order to achieve the above objective and other related objectives, the invention provides a vehicle. The vehicle includes a vehicle body, a sliding door, a switch, and a door control module.

The vehicle body is provided inside with a main power supply and a vehicle body controller; the sliding door is mounted on the vehicle body; the switch is arranged at a position where the sliding door is in contact with the vehicle body, connects a circuit on the sliding door and the vehicle body when the sliding door is closed, and disconnects the circuit on the sliding door and the vehicle body when the sliding door is opened; the door control module is arranged in the sliding door, and includes an backup power supply and a controller that are integrated, the backup power supply being electrically connected with each electrical component on the sliding door, the controller being electrically connected with each component on the sliding door that needs to be controlled, and being communicated with a vehicle body controller; and the backup power supply and the controller provide power support and control support for each component on the sliding door respectively when the sliding door is opened.

In an embodiment of the vehicle of the invention, the sliding door is provided inside with a door central control room, and the door central control room is further provided with a power supply room and a controller room; the power supply room is used to place the backup power supply, and the controller room is used to place the controller.

In an embodiment of the vehicle of the invention, the sliding door is further provided with a secondary instrument panel, and the secondary instrument panel is arranged in a panel cavity of the door central control room; the panel cavity is an open cavity arranged on one side of the door central control room close to an inside of the vehicle body, and is open toward the inside of the vehicle body.

In an embodiment of the vehicle of the invention, the switch is a contact-type switch, and the contact-type switch includes a first contact piece and a second contact piece, the first contact piece being arranged at the position where the vehicle body is in contact with the sliding door, the first contact piece being electrically connected with the main power supply and the vehicle body controller through circuit; the second contact piece is arranged on the sliding door corresponding to a position of the first contact piece on the vehicle body, and the second contact piece is electrically connected with the controller, the backup power supply and each component of the sliding door through circuit.

In an embodiment of the vehicle of the invention, when the sliding door is closed, the first contact piece comes into contact with the second contact piece to open the contact-type switch, and a circuit of the first contact piece on one side of the vehicle body is connected to a circuit of the second contact piece on one side of the sliding door; when the sliding door is opened, the first contact piece comes out of contact with the second contact piece so that the contact-type switch is closed, and the circuit of the first contact piece on one side of the vehicle body is disconnected from the circuit of the second contact piece on one side of the sliding door.

In an embodiment of the vehicle of the invention, when the sliding door is closed, the main power supply and the vehicle body controller of the vehicle are connected to each electrical component on the sliding door through the contact-type switch, the main power supply supplies power to each component on the sliding door, and the vehicle body controller controls an operation of each component on the sliding door that needs to be controlled.

In an embodiment of the vehicle of the invention, the sliding door is provided with an electric door lock, and the controller is electrically connected with the electric door lock to detect whether the sliding door is in an open state or a closed state.

In an embodiment of the vehicle of the invention, the door control module is further integrated with a power detector, and the power detector monitors a power of the backup power supply.

In an embodiment of the vehicle of the invention, when the sliding door is closed and the power detector detects that the power of the backup power supply is lower than a preset power value, the main power supply charges the backup power supply.

The invention further provides a control module for sliding door, and the control module for sliding door is arranged in the sliding door. The control module for sliding door includes a controller and a backup power supply.

The controller is arranged in the sliding door, and the controller is electrically connected with each component on the sliding door that needs to be controlled and is communicated with a vehicle body controller; the backup power supply is arranged in the sliding door, and the backup power supply is electrically connected with each electrical component on the sliding door; and the controller and the backup power supply integrate into a module, and the backup power supply and the controller provide power support and control support for each component on the sliding door respectively when the sliding door is opened.

In the vehicle of the invention, an electronic control system for sliding door is mounted, so that the sliding door on the vehicle may maintain normal operation without wiring harness connection, wherein for the electronic control system for sliding door, the switch is arranged at the position where the vehicle body is in contact with the sliding door so that the circuit on the vehicle body and sliding door may be connected when the sliding door is closed without wiring harness connection, and the backup power supply and the controller are arranged in the sliding door so as to maintain normal operation of the sliding door when the sliding door is opened. In summary, the vehicle of the invention maintains normal operation of the sliding door without harness connection design by arranging the electronic control system for sliding door, and the electronic control system has the advantages of simple structure, high versatility and high integration and may be freely combined with other components of the sliding door so as to effectively reduce the cost of the sliding door of the vehicle.

### BRIEF DESCRIPTION OF THE DRAWINGS

In order to more clearly describe the technical solutions of the embodiments of the present invention, the accompanying drawings required to describe the embodiments are briefly described below. Apparently, the accompanying drawings described below are only some embodiments of the present invention. A person skilled in the art may obtain other drawings from the accompanying drawings without involving an inventive effort.

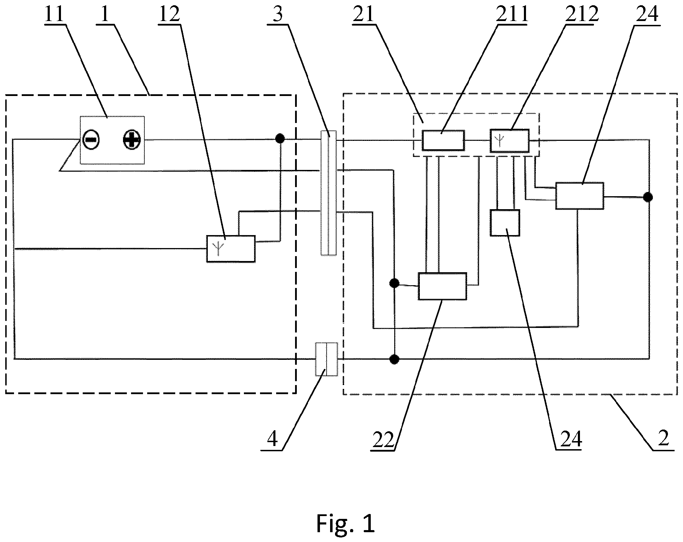

Fig. 1 is a structural diagram of a circuit of an electronic control system for sliding door in the vehicle of the invention in an embodiment;

### Descriptions for numerals of members:

1. Vehicle body electrical appliance module; 11. Main power supply; 12. Vehicle body controller; 2. Electrical appliance module for sliding door; 21. Door control module; 211. Backup power supply; 212. Controller; 22. electric door lock; 23. Glass motor; 24. Secondary instrument panel; 3. Switch; 31. First contact piece; 32. Second contact piece; 4. Sliding door hinge.

### DESCRIPTION OF THE PREFERRED EMBODIMENTS

Through specific examples of the present invention below, technicians of the field can easily understand other advantages and efficacies of the present invention revealed by the specification The present invention can also be implemented or applied through other different ways, and the details of the specification can also be modified or changed based on different views and applications without deviating from the spirit of the present invention It should be noted that, in the case of no conflicts, the following embodiments and features in the embodiments can be combined mutually. It should also be understood that the terminology used in the embodiments of the present invention is for describing specific embodiments and is not intended to limit the scope of the present invention. The experimental methods that do not specify the specific conditions in the following examples are generally based on conventional conditions or according to manufacturer ' s recommended conditions.

Please refer to Fig. 1. It should be noted that the structures, proportions, sizes, etc. shown in the drawings of this specification are only used to coordinate with the content disclosed in the specification for the understanding and reading of those skilled in the art, and are not used to limit the conditions for the implementation of the present invention, so they have no technical substantive significance. Any structural modifications, changes in proportions, or adjustments in size should still fall within the scope of the technical content disclosed in the present invention without affecting the effectiveness and purpose of the present invention. At the same time, terms such as "upper", "lower", "left", "right", "middle" and "one" cited in this specification are only for convenience of description and are not used to limit the scope of the present invention. Changes or adjustments in their relative relationships, as long as there is no substantial change in the technical content, shall also be deemed to be within the scope of the present invention.

When the embodiments give numerical ranges, it should be understood that, unless otherwise stated in the present invention, both endpoints of each numerical range and any value between the two endpoints can be selected. Unless otherwise defined, all technical and scientific terms used in the present invention are consistent with those skilled in the art who have knowledge of the prior art and the description of the present invention. They can also use methods, equipment, and materials similar to those described in the embodiments of the present invention. or any equivalent prior art methods, equipment and materials to implement the present invention.

With reference to Fig. 1, an objective of the invention is to provide a vehicle and a control module for sliding door therefor. The electronic control system for sliding door mounted in the vehicle may improve the technical problems in the prior art that the electronic control system on the sliding door needs to be connected to the vehicle body through the wiring harness for sliding door, and the wiring harness for sliding door on the vehicle has a complex structure and poor versatility.

With reference to Fig. 1, Fig. 1 is a structural diagram of a circuit of an electronic control system for sliding door in the vehicle of the invention. The above electronic control system for sliding door in the vehicle is arranged in a vehicle body electrical appliance module 1 and an electrical appliance module for sliding door 2, wireless connection between the electrical appliance module for sliding door 2 and the vehicle body electrical appliance module 1 is realized by arranging a switch 3 and a sliding door hinge 4 at a position where the vehicle body is in contact with the sliding door, and a door control module 21 is arranged in the electrical appliance module for sliding door 2, so as to maintain normal operation when the sliding door is opened. As seen from above, the vehicle of the invention may include a vehicle body, a plurality of sliding doors, the switch 3, and the door control module 21.

As shown in Fig. 1, the vehicle body of the vehicle of the invention is provided inside with the vehicle body electrical appliance module 1, and a circuit of the vehicle body electrical appliance module 1 is provided inside with a main power supply 11 and a vehicle body controller 12; the main power supply 11 provides power support for electrical components in the vehicle, such as an electric door lock 23, a glass motor 24, a glass window switch and other components, and the vehicle body controller 12 provides control support for components that need to be controlled in the vehicle, such as the electric door lock 23, the glass motor 24, the glass window switch and other components.

At the same time, the plurality of sliding doors on the vehicle are mounted on the vehicle body, and the switch 3 is provided at the position where the sliding door is in contact with the vehicle body, wherein the position where the switch 3 is mounted is not limited, and in an embodiment of the invention, the position where the switch 3 is mounted is located at a guide rail where the sliding door is in contact with the vehicle body. The switch 3 is used to connect the circuit on the vehicle body electrical appliance module 1 and the electrical appliance module for sliding door 2 when the sliding door is closed. The switch 3 is a contact-type switch, and divided into two parts, wherein one part is arranged on the sliding door, the other part is arranged on the vehicle body. When the sliding door is closed, the part of the switch 3 on the sliding door comes into contact with the other part thereof on the vehicle body to, in combination of a circuit on sliding door hinge 4 that remains connected and the vehicle body and the sliding door, connect a circuit on the vehicle body electrical appliance module 1 and the electrical appliance module for sliding door 2. When the sliding door is opened, the part of the switch 3 on the sliding door is out of contact with the other part thereof on the vehicle body, causing the circuit on the vehicle body electrical appliance module 1 and the electrical appliance module for sliding door 2 to be disconnected.

As shown in Fig. 1, the door control module 21 is arranged in the electrical appliance module for sliding door 2 in the sliding door; the door control module 21 may maintain the normal operation of each component in the sliding door when the sliding door is opened, and receive power support and control support provided by the main power supply 11 and the vehicle body controller 12 in the vehicle body electrical appliance module 1 when the sliding door is closed. The door control module 21 includes a backup power supply 211 and a controller 212 that are integrated with each other. The backup power supply 211 is electrically connected with each electrical component on the sliding door through circuit, and is also electrically connected with the switch 3 through circuit. The above arrangement enables the backup power supply 211 to provide power support for each electrical component in the electrical appliance module for sliding door 2 and at the same time connect the main power supply through the switch 3 for charging. The controller 212 is electrically connected with each component on the sliding door that needs to be controlled, and is also electrically connected with the switch 3 through circuit. The controller 212 is further provided with a wireless communication module, and may be also communicated with the vehicle body controller 12 through a wireless network in addition to being connected with the vehicle body controller 12 in the vehicle body electrical appliance module 1 through wired circuits, so as to enable the sliding door to receive control support from the vehicle body controller 12 in a wireless state to achieve normal operation and control of tasks such as door locking and window opening

When the sliding door is closed, the circuit on the electrical appliance module for sliding door 2 is connected with the circuit on the vehicle body electrical appliance module 1 through the switch 3, and the main power supply 11 and the vehicle body controller 12 of the vehicle are connected to each electrical component on the sliding door and each component that needs to be controlled through the switch 3, the main power supply 11 providing power support for each electrical component on the sliding door, the vehicle body controller 12 providing control support for each component on the sliding door that needs to be controlled; when the sliding door is opened, the circuit on the vehicle body electrical appliance module 1 is disconnected from the circuit on the electrical appliance module for sliding door 2, and the backup power supply 211 integrated in the door control module 21 provides power support for each electrical component on the sliding door, wherein the backup power supply 211 and the sliding door hinge 4 provide power and auxiliary grounding for the electrical appliance module for sliding door 2 respectively, and the controller 212 controls the operation of each component on the sliding door that needs to be controlled, e.g., controlling the glass motor 23 to lift the door and window glass, controlling a switch of the electric door lock 22, etc., while the controller 212 being also communicated with the vehicle body controller 12 in a timely manner through a built-in wireless communication module to feed back switching status of the sliding door to a combined instrument panel of the vehicle for display through the vehicle body controller 12 for reminding a driver of an open status of the sliding door to avoid the problem of forgetting to close the door; further, when the controller 212 receives a sleep signal sent by the vehicle body controller 12, it enters the sleep status synchronously.

In an embodiment of the invention, the sliding door is provided inside with a door central control room, and the door central control room is arranged in a door body on a bottom side of a handle of the sliding door. The central control room is further provided inside with a power supply room and a controller room. The power supply room is used to mount the backup power supply 211, and the controller room is used to place the controller 212.

In the embodiment, the sliding door is further provided with a secondary instrument panel, which is integrated into the door control module 21, and the secondary instrument panel is electrically connected with the backup power supply 211 and the controller 212 for displaying the operation status of each component on the sliding door. The secondary instrument panel is located on one side of the sliding door close to an interior of the vehicle body; a user in the vehicle may learn the status of each component of the sliding door through the secondary instrument panel, and interact with the secondary instrument panel through graphical operations to control the operation of each component on the sliding door.

In the embodiment, the door central control room is further provided with a panel cavity, the panel cavity is an open cavity, and the panel cavity is arranged on one side of the central control room close to the interior of the vehicle body and is open toward the interior of the vehicle body. The secondary instrument panel is fixed in the panel cavity in the door central control room.

As shown in Fig. 1, in an embodiment of the invention, the switch 3 is a contact-type switch, and the switch 3 includes a first contact piece 31 and a second contact piece 32. The first contact piece 31 is arranged at the position where the vehicle body is in contact with the sliding door, such as at the guide rail where the vehicle body is in contact with the sliding door; the second contact piece 32 is arranged on the sliding door corresponding to a position of the first contact piece 31 on the vehicle body. The first contact piece 31 is electrically connected with the main power supply 11 of the vehicle body electrical appliance module 1 and the vehicle body controller 12 in the vehicle body through circuit, and the second contact piece 32 is electrically connected with the backup power supply 211, the controller 212, the electric door lock 22, the glass motor 23 and other components of the electrical appliance module for sliding door 2 in the sliding door through circuit.

In the embodiment, when the sliding door is closed, the first contact piece 31 and the second contact piece 32 of the switch 3 are in contact so that the contact-type switch is opened, and the circuit on the vehicle body electrical appliance module 1 and the electrical appliance module for sliding door 2 are connected through the switch 3 and the sliding door hinge 4; when the sliding door is opened, the first contact piece 31 and the second contact piece 32 of the switch 3 are out of contact, causing the contact-type switch to close, and the circuit on the vehicle body electrical appliance module 1 and the electrical appliance module for sliding door 2 are disconnected.

As shown in Fig. 1, in an embodiment of the invention, the sliding door is further provided with an electric door lock 23, and the controller 212 is electrically connected with the electric door lock 22; the electric door lock 22 may send a locking signal and an unlocking signal to the controller 212 when the sliding door is opened and closed, and the controller 212 detects whether the sliding door is in an open state or a closed state by receiving the unlocking signal and the locking signal from the electric door lock 22.

As shown in Fig. 1, in an embodiment of the invention, the door control module 21 of the sliding door is integrated inside with a power detector, the power detector is electrically connected with the backup power supply 211 and the controller 212, and the power detector is used to monitor a power of the backup power supply 211; when the power detector detects that the remaining power in the backup power supply 211 is lower than a preset power value, it will send out a low power signal and communicate with the vehicle body controller 12 through the controller 212, or directly send the signals to the vehicle body controller 12 through the connected circuits, for finally displaying on the combined instrument panel and issuing a buzzer alarm; if the sliding door is closed, the main power supply 11 in the vehicle body electrical appliance module 1 charges the backup power supply 11 through the circuit connected by the switch 3; if the sliding door is open, the user needs to close the sliding door first, and then charge the backup power supply 11 through the main power supply 11 in the vehicle body electrical appliance module 1.

With reference to Fig. 1, the invention further provides a control module for sliding door, and the above control module for sliding door is arranged in the sliding door. The above control module for sliding door includes a backup power supply 211 and a controller 212. The control module for sliding door may maintain the normal operation of each component in the sliding door when the sliding door is opened, and receive power support and control support provided by the main power supply 11 and the vehicle body controller 12 in the vehicle body electrical appliance module 1 when the sliding door is closed. The above control module for sliding door includes a backup power supply 211 and a controller 212 that are integrated with each other. The backup power supply 211 is electrically connected with each electrical component on the sliding door such as the electric door lock 23, the glass motor 24, the glass window switches and other components through circuit, and is also electrically connected with the switch 3 through circuit. The above arrangement enables the backup power supply 211 to provide power support for each electrical component in the electrical appliance module for sliding door 2 and at the same time connect the main power supply through the switch 3 for charging. The above controller 212 is electrically connected with each component on the sliding door that needs to be controlled such as electric door lock 23, the glass motor 24, the glass window switches and other components, and is also electrically connected with the switch 3 through circuit. The controller 212 is further provided with a wireless communication module, and may be also communicated with the vehicle body controller 12 through a wireless network in addition to being connected with the vehicle body controller 12 in the vehicle body electrical appliance module 1 through wired circuits, so as to enable the sliding door to receive control support from the vehicle body controller 12 in a wireless state to achieve normal operation and control of tasks such as door locking and window opening

In the vehicle of the invention, an electronic control system for sliding door is mounted, so that the sliding door on the vehicle may maintain normal operation without wiring harness connection, wherein for the electronic control system for sliding door, the switch 3 is arranged at the position where the vehicle body is in contact with the sliding door so that the circuit on the vehicle body and sliding door may be connected when the sliding door is closed without wiring harness connection, and the backup power supply 211 and the controller 212 are arranged in the sliding door so as to maintain normal operation of the sliding door when the sliding door is opened. In summary, the vehicle of the invention maintains normal operation of the sliding door without harness connection design by arranging the electronic control system for sliding door, and the electronic control system has the advantages of simple structure, high versatility and high integration and may be freely combined with other components of the sliding door so as to effectively reduce the cost of the sliding door of the vehicle.

The preferred embodiments of the present invention disclosed above are only used to help the description of the present invention. The preferred embodiments do not describe all the details, and are not intended to limit the invention only to be the specific embodiments. It is obvious that various modifications and changes can be made to the content of the specification. The present invention selects and specifically describe the embodiments with the purpose of better explain the principle and practical use of the present invention, such that a person skilled in the art can well understand and utilize the present invention. The present invention is merely limited by the appended claims and the scope and equivalents thereof.

## Claims

1. A vehicle comprising:
a vehicle body provided inside with a main power supply and a vehicle body controller;
a sliding door mounted on the vehicle body;
a switch arranged at a position where the sliding door is in contact with the vehicle body, the switch connecting a circuit on the sliding door and the vehicle body when the sliding door is closed and disconnecting the circuit on the sliding door and the vehicle body when the sliding door is opened;
a door control module arranged in the sliding door, the door control module comprising an backup power supply and a controller that are integrated, the backup power supply being electrically connected with each electrical component on the sliding door, the controller being electrically connected with each component on the sliding door that needs to be controlled and being communicated with the vehicle body controller;
wherein the backup power supply and the controller provide power support and control support for each component on the sliding door respectively when the sliding door is opened.

2. The vehicle according to claim 1, wherein the sliding door is provided inside with a door central control room, and the door central control room is further provided with a power supply room and a controller room; the power supply room is used to place the backup power supply, and the controller room is used to place the controller.

3. The vehicle according to claim 2, wherein the sliding door is further provided with a secondary instrument panel, and the secondary instrument panel is arranged in a panel cavity of the door central control room; the panel cavity is an open cavity arranged on one side of the door central control room close to an inside of the vehicle body, and is open toward the inside of the vehicle body.

4. The vehicle according to claim 1, wherein the switch is a contact-type switch, and the contact-type switch comprises a first contact piece and a second contact piece, the first contact piece being arranged at the position where the vehicle body is in contact with the sliding door, the first contact piece being electrically connected with the main power supply and the vehicle body controller through circuit; the second contact piece is arranged on the sliding door corresponding to a position of the first contact piece on the vehicle body, and the second contact piece is electrically connected with the controller, the backup power supply, and each component of the sliding door through circuit.

5. The vehicle according to claim 4, wherein when the sliding door is closed, the first contact piece comes into contact with the second contact piece to open the contact-type switch, and a circuit of the first contact piece on one side of the vehicle body is connected to a circuit of the second contact piece on one side of the sliding door; when the sliding door is opened, the first contact piece comes out of contact with the second contact piece so that the contact-type switch is closed, and the circuit of the first contact piece on one side of the vehicle body is disconnected from the circuit of the second contact piece on one side of the sliding door.

6. The vehicle according to claim 4, wherein when the sliding door is closed, the main power supply and the vehicle body controller of the vehicle are connected to each electrical component on the sliding door through the contact-type switch, the main power supply supplies power to each component on the sliding door, and the vehicle body controller controls an operation of each component on the sliding door that needs to be controlled.

7. The vehicle according to claim 1, wherein the sliding door is provided with an electric door lock, and the controller is electrically connected with the electric door lock to detect whether the sliding door is in an open state or a closed state.

8. The vehicle according to claim 1, wherein the door control module is further integrated with a power detector, and the power detector monitors a power of the backup power supply.

9. The vehicle according to claim 6 or 8, wherein when the sliding door is closed and the power detector detects that the power of the backup power supply is lower than a preset power value, the main power supply charges the backup power supply.

10. A control module for sliding door, the control module being arranged in the sliding door and comprising:
a controller arranged in the sliding door, the controller being electrically connected with each component on the sliding door that needs to be controlled and being communicated with a vehicle body controller;
a backup power supply arranged in the sliding door, the backup power supply being electrically connected with each electrical component on the sliding door;
wherein the controller and backup power supply are integrated into one module, and the backup power supply and the controller provide power support and control support for each component on the sliding door respectively when the sliding door is opened.
